# EUROPEAN PATENT SPECIFICATION

(11) **EP 2 815 930 B1**
(45) Date of publication and mention of the grant of the patent: **27.02.2019**
(21) Application number: 13172519.4
(22) Date of filing: 18.06.2013
(51) Int. Cl.: B60R 21/015

(54) **Arrangement, vehicle and method for control of vehicle-airbag-status display**
Anordnung, Fahrzeug und Verfahren zur Steuerung einer Fahrzeug-Airbag-Statusanzeige
Agencement, véhicule et procédé de commande d'affichage d'état de l'airbag d'un véhicule

(43) Date of publication of application: 24.12.2014
(73) Proprietor: Volvo Car Corporation, 40 531 Göteborg (SE)
(72) Inventor: Hardå, Peter, 42349 Torslanda (SE); Heurlin, Fredrik, 42353 Torslanda (SE)
(74) Representative: Valea AB

(56) References cited:
- DE-A1-102004 035 425
- DE-A1-102005 048 991
- DE-A1-102007 051 543
- US-A1- 2010 280 711
- US-A1- 2013 151 027

## Description

### TECHNICAL FIELD

Embodiments herein relate to an arrangement for control of vehicle-airbag-status display. Embodiments herein further relate to a vehicle comprising an arrangement for control of vehicle-airbag-status display and to a method for controlling a vehicle-airbag-status display in a vehicle.

### BACKGROUND

Modern vehicles are often equipped with a number of systems arranged for different purposes. For example, a vehicle may comprise a cruise-control system, an anti-lock braking system (ABS), restraint systems including airbags and seatbelt tensioners, lane departure warning system, status checking arrangements, climate control arrangements, entertainment systems and navigation systems. Some of the systems require vehicle operator input in certain situations, other systems are designed to display a system status to a vehicle operator.

When the vehicle operator starts the vehicle, he/she may initially be informed of various system-statuses. Display icons may display engine oil temperature, whether vehicle doors are open or closed, airbag-statuses, ABS-status and statuses relating to other systems. The driver may be informed whether seatbelts are fastened for all occupied seats via LED-lights or audio-alerts. With an increasing number of vehicle systems the amount of information the vehicle operator has to deal with increases. Some of the system-statuses the vehicle operator may need to confirm, some are simply displayed when the vehicle is started.

Since a system-status for many of the systems are indicated with a respective display icon, a LED-light or similar, every single status displayed to the vehicle operator generally requires only a minute share of his/hers attention. However, the aggregated amount of information displayed to the vehicle operator may be substantial. This may lead to information-overload. When the vehicle operator is required to share his/her attention between numerous different status-messages, there is a risk that he/she will miss a message that may be of importance. Perhaps the operator may find many of the messages unimportant or just annoying when he/she is anxious to get started, and the operator may therefore not pay attention to every single message each time the vehicle is started. Hence, an indication that a passenger airbag is activated or deactivated may be overlooked.

US2012050068A1 refers to a rearview mirror comprising a display. The display may provide a driver with information relating to whether a passenger airbag is enabled or disabled. The information display serves as a status indicator intended to notify the driver and front passenger of a frontal airbag-status. The status is displayed through the use of LED-light, audio or the like.

In US6152483A a switching unit for selectively disabling a passenger airbag of a motor vehicle is described. A plug and housing may include means for automatically indicating if the passenger airbag is activated or deactivated.

In DE102004035425A1 a switching device for a motor vehicle is described, which according to the abstract has at least one operating element for the operating of functional components. A control unit is connected to the operating element and allocates to the operating element other switching functions in dependence upon various driving situations. The control unit is linked to the functional components via a vehicle databus. The operating element has an indicator upon which the switching functions allocated to the control unit can be visualized. A switching method is also described according to the abstract in which the switching states of the operating element at the end of a journey are linked with a last access identification for the vehicle and stored, and a visual or acoustic warning triggered if the switching states at the commencement of the next journey under the same access identification are changed.

In some situations the abovementioned passenger airbag-status display are sufficient. However, improvements in the field of vehicle-airbag-status display are still desirable.

### SUMMARY

Embodiments herein aim to provide an arrangement for control of vehicle-airbag-status display eliminating or at least reducing the problems and/or drawbacks associated with prior art solutions.

According to an embodiment, this is provided by an arrangement for control of vehicle-airbag-status display in a vehicle hosting the arrangement, the arrangement comprising; vehicle operator detection means, arranged to detect a seated vehicle operator, vehicle-airbag-status display means, arranged to display, in a vehicle interior, at least one of a first and a second vehicle-airbag-status, wherein the arrangement further comprises; vehicle operator identification means, arranged to identify a seated vehicle operator, detected by the vehicle operator detection means, and to send information indicative of the vehicle operator identity to a processing unit, vehicle-airbag-status change control means, arranged to control change of airbag-status and to send information indicative of airbag-status change to the processing unit, a processing unit comprising memory means, the processing unit being arranged to receive and save to the memory means information from the vehicle operator identification means and the vehicle-airbag-status change control means, to compare the received and saved information with previously received and saved information, and to control the vehicle-airbag-status display means based on the comparison, such that at least one of the first and the second vehicle-airbag-statuses are displayed only if the airbag-status has been changed since the previous occasion the same vehicle operator was identified by the vehicle operator identification means.

Since at least one of the first and the second vehicle-airbag-statuses are displayed only if the airbag-status has been changed since the last occasion the same vehicle operator was identified by the vehicle operator identification means, relevant information may be displayed to the vehicle operator only when required.

In some situations, a first vehicle operator may intend to mount a child seat in a front passenger seat. In order to avoid a scenario where a passenger airbag is deployed against the child seat, he/she inactivates the passenger airbag. The child seat may be a front-facing child seat or a rear-facing child seat. In some vehicle models the passenger airbag may have to be inactivated at a workshop, in other the passenger airbag may be inactivated via a vehicle key or the like.

When the passenger airbag has been inactivated by the vehicle-airbag-status change control means, and the first vehicle operator enters and starts the vehicle, at least one of the first and the second vehicle-airbag-statuses are displayed. The first vehicle operator is thereby informed of the current passenger airbag-status. The subsequent time the first vehicle operator, identified by the vehicle operator identification means, enters the vehicle, neither one of the first and the second vehicle-airbag-statuses are displayed. In this situation, display of the first or the second vehicle-airbag-status is redundant information for the first vehicle operator since he/she has already been made aware of the vehicle-airbag-status.

However, if a second vehicle operator, identified by the vehicle operator identification means, enters the vehicle, at least one of the first and the second vehicle-airbag-statuses are displayed. The information is important for the second vehicle operator since he/she has not previously received information on the vehicle-airbag-status.

If the vehicle-airbag-status is changed again by the vehicle-airbag-status change control means, such that the passenger airbag is activated, at least one of the first and the second vehicle-airbag-statuses are displayed both when the first and the second vehicle operators enters the vehicle for the first time after the activation. Thereafter neither the first nor the second vehicle-airbag-statuses are displayed when any of the first and the second vehicle operator enters the vehicle again.

Hereby, different vehicle operators may receive information regarding a vehicle-airbag-status when it is relevant for them, i.e. when the vehicle-airbag-status has not been previously displayed to them. All different vehicle operators may further be spared from display of information regarding a vehicle-airbag-status when it is redundant for them, i.e. when the current vehicle-airbag-status has already been displayed to them.

Thanks to this, the information-load to any vehicle operator may be well-balanced, such that information-overload may be avoided. Furthermore, since the same information is not displayed to the vehicle operator each time he/she enters the vehicle, the vehicle operator may not get so used to the repeatedly displayed information that he/she stops to reflect over the vehicle-airbag-status that the information is indicative of. Since the information is displayed only when required, the vehicle operator may perceive the information to be pronounced and unmistakable.

Thus, hereby is provided an arrangement for control of vehicle-airbag-status display, eliminating or at least reducing the problems and/or drawbacks associated with prior art solutions.

The first vehicle-airbag-status is arranged to represent an inactive airbag and the second vehicle-airbag-status is arranged to represent an active airbag.

Since the first vehicle-airbag-status is arranged to represent an inactive airbag and the second vehicle-airbag-status is arranged to represent an active airbag, the arrangement may provide a vehicle operator with necessary information both when an airbag is active and when an airbag is inactive.

According to some embodiments, the vehicle operator identification means comprise image capturing means arranged to monitor the vehicle interior, and that at least one of the vehicle operator identification means and the processing unit comprises logic for the identification of the vehicle operator identity.

Since the vehicle operator identification means comprise image capturing means, the vehicle interior may be monitored such that the vehicle operator can be identified in a reliable manner.

According to some embodiments, the vehicle operator identification means are arranged to identify a seated vehicle operator through an identification device carried by the vehicle operator, the identification device being selectively one of; an electronic key, an RFID-tag and a mobile communication device.

Since the vehicle operator identification means are arranged to identify a seated vehicle operator through an identification device carried by the vehicle operator, the identification of the vehicle operator may be performed in an easy manner.

According to some embodiments, the vehicle-airbag-status display means are arranged to display at least one of an icon, a symbol, a text message and a confirmation dialogue on a vehicle display facing the vehicle interior.

Since the vehicle-airbag-status display means are arranged to display at least one of an icon, a symbol, a text message and a confirmation dialogue on a vehicle display facing the vehicle interior, a vehicle operator may be alerted in an intuitive and reliable manner.

According to some embodiments, the arrangement further comprises means for providing an audible alert, arranged to provide the audible alert when at least one of the first and the second vehicle-airbag-statuses are displayed.

Since the arrangement comprises means for providing an audible alert, arranged to provide the audible alert when at least one of the first and the second vehicle-airbag-statuses are displayed, the vehicle operator alert may be enhanced.

According to some embodiments, the arrangement further comprises means for providing a haptic alert, arranged to provide the haptic alert when at least one of the first and the second vehicle-airbag-statuses are displayed.

Since the arrangement comprises means for providing a haptic alert, arranged to provide the haptic alert when at least one of the first and the second vehicle-airbag-statuses are displayed, the vehicle operator alert may be enhanced.

According to some embodiments, the arrangement further comprises second vehicle-airbag-status display means, arranged to display the first vehicle-airbag-status only when a passenger airbag is inactivated.

Since the arrangement comprises second vehicle-airbag-status display means, arranged to display the first vehicle-airbag-status only when a passenger airbag is inactivated, information may be displayed in a clear manner. Thanks to the cooperation between the first- and second vehicle-airbag-status display means, vehicle occupants may be provided with clear and distinct information regarding the airbag-status.

Embodiments herein also aim to provide a vehicle comprising an arrangement for control of vehicle-airbag-status display without the problems or drawbacks described above.

According to some embodiments, this is provided by a vehicle comprising an arrangement for control of vehicle-airbag-status display according to embodiments disclosed herein. Hereby vehicle-airbag-status display may be controlled such that relevant information is displayed to the vehicle operator only when needed.

Thus, hereby is provided a vehicle comprising an arrangement for control of vehicle-airbag-status display, eliminating or at least reducing the problems and/or drawbacks associated with prior art solutions.

Embodiments herein also aim to provide a method for controlling a vehicle-airbag-status display in a vehicle without the problems or drawbacks described above.

According to some embodiments, this is provided by a method for controlling a vehicle-airbag-status display in a vehicle, characterized in that the method comprises; detecting, by vehicle operator detection means, a vehicle operator; identifying, by vehicle operator identification means, the vehicle operator; sending information indicative of the vehicle operator identity to a processing unit; sending information indicative of an airbag-status change to the processing unit; receiving and saving, by the processing unit, the information indicative of the vehicle operator identity and the information indicative of the airbag-status change; comparing, by the processing unit, the received and saved information indicative of the vehicle operator identity and the received and saved information indicative of the airbag-status change with previously received and saved information; controlling vehicle-airbag-status display means based on the comparison by displaying at least one of the first and the second vehicle-airbag-statuses only if the airbag-status has been changed since the previous occasion the same vehicle operator was identified by the vehicle operator identification means.

Since display of at least one of the first and the second vehicle-airbag-statuses is performed only if the airbag-status has been changed since the last occasion the same vehicle operator was identified by the vehicle operator identification means, the vehicle operator may receive relevant information only when required.

Thus, hereby is provided a method for controlling a vehicle-airbag-status display in a vehicle, eliminating or at least reducing the problems and/or drawbacks associated with prior art solutions.

Further features of, and advantages with, the embodiments herein will become apparent when studying the appended claims and the following detailed description. Those skilled in the art will realize that different features of the embodiments herein may be combined to create embodiments other than those described in the following, without departing from the scope of the appended claims.

### BRIEF DESCRIPTION OF THE DRAWINGS

The various aspects of embodiments herein, including its particular features and advantages, will be readily understood from the following detailed description and the accompanying drawings, in which:
Fig. 1 illustrates a vehicle and an arrangement for control of vehicle-airbag-status display in a vehicle hosting the arrangement according to some embodiments.
Fig. 2 illustrates a method for controlling a vehicle-airbag-status display in a vehicle according to some alternative embodiments.

### DETAILED DESCRIPTION

Embodiments herein will now be described more fully with reference to the accompanying drawings, in which example embodiments are shown. However, this application should not be construed as limited to the embodiments set forth herein. Disclosed features of example embodiments may be combined as readily understood by one of ordinary skill in the art to which this application belongs. Like numbers refer to like elements throughout.

Well-known functions or constructions will not necessarily be described in detail for brevity and/or clarity.

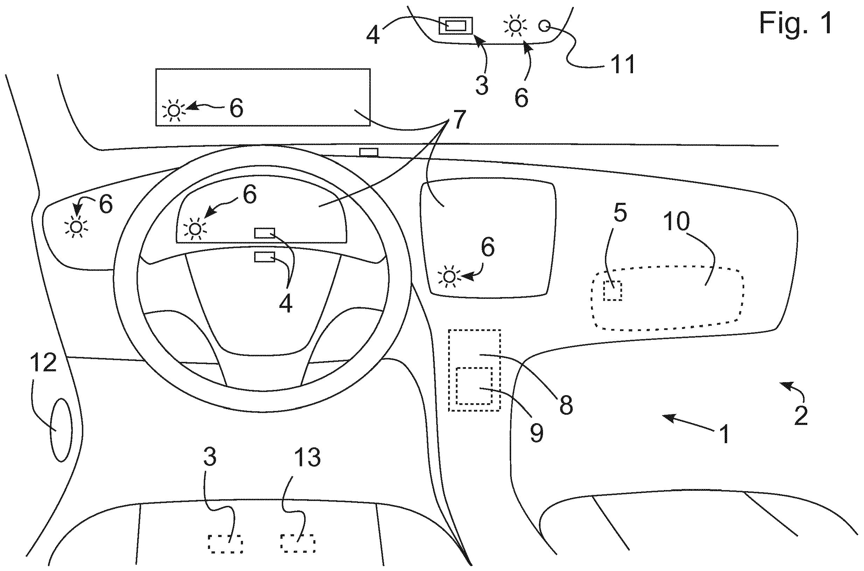

In Fig. 1 is illustrated an arrangement **1** for control of vehicle-airbag-status display. In Fig. 1 is also illustrated a vehicle **2** hosting the arrangement 1 for control of the vehicle-airbag-status display.

The arrangement 1 according to the Fig. 1 illustrated embodiment comprises vehicle operator detection means **3**, arranged to detect a seated vehicle operator. The vehicle operator detection means 3 may be connected to a vehicle lock system or alarm system and may detect when a vehicle operator unlocks the vehicle. The vehicle operator detection means 3 may detect, via sensors, when the vehicle operator opens a door. Alternatively, the vehicle operator detection means 3 detect, via e.g. a weight sensor, when the vehicle operator places himself/herself in the seat. According to some embodiments, the vehicle operator detection means 3 are arranged to detect when a vehicle operator turns a key. According to other embodiments the vehicle operator detection means 3 may detect the presence of a vehicle operator via a movement detector in the interior of the vehicle. The vehicle operator detection means 3 may comprise image capturing means, e.g. an interior camera, arranged to detect vehicle operators by analyse of images taken by the image capturing means.

The arrangement 1 further comprises vehicle operator identification means **4**. The vehicle operator identification means 4 are arranged to identify a seated vehicle operator, detected by the vehicle operator detection means 3. The vehicle operator identification means 4 may comprise image capturing means arranged to monitor the vehicle interior. According to some embodiments, the image capturing means used for vehicle operator detection may be used also for the vehicle operator identification; in other embodiments separate image capturing means may be used. The vehicle operator identification means 4 may be arranged in any position from where a seated vehicle operator may be identified, e.g. in or in the vicinity of an interior rear-view mirror, a dashboard, a display or a steering wheel.

In the Fig. 1 illustrated embodiment, vehicle-airbag-status change control means 5 are illustrated with dashed lines. The vehicle-airbag-status change control means 5 are arranged to control change of an airbag-status. The vehicle-airbag-status change control means 5 may be arranged as a keyhole, arranged to let a person insert and turn a vehicle key between an on-position and an off-position. According to some embodiments, the vehicle-airbag-status change control means 5 are arranged as a switch, switchable between an on-position and an off-position. According to other embodiments, an interface for the vehicle-airbag-status change control means 5 is arranged on a vehicle display. A person may then control the vehicle-airbag-status change control means 5 via icons, symbols, text interaction or by enter a code on the display.

The arrangement 1 illustrated in Fig. 1 comprises vehicle-airbag-status display means **6**. The vehicle-airbag-status display means 6 are arranged to display at least one of a first and a second vehicle-airbag-statuses into the vehicle interior. The vehicle-airbag-status display means 6 may be arranged as one or more lights or LEDs, arranged e.g. on the dashboard, centerstack, inner ceiling, or near the interior rear-view mirror. According to some embodiments, the vehicle-airbag-status display means 6 are arranged to display at least one of an icon, a symbol, a text message and a confirmation dialogue on a vehicle display **7** facing the vehicle interior. The vehicle-airbag-statuses may be displayed on one or more displays 7, such as a driver information display, a centerstack display or a head-up-display. The icon, symbol, and/or text message may be displayed for any desired predefined length of time as a vehicle operator starts the vehicle 2. A confirmation dialogue may be displayed until the vehicle operator confirms that he/she has seen the information.

The vehicle operator identification means 4, illustrated in Fig. 1, are arranged to send information indicative of the vehicle operator identity to a processing unit **8.** The processing unit 8 comprises one or more processors with associated software and memory means **9** in communication with the one or more processors. At least one of the vehicle operator identification means 4 and the processing unit 8 comprises logic for the identification of the vehicle operator identity. The processing unit 8 is arranged to receive and save to the memory means 9 information from the vehicle operator identification means 4 and the vehicle-airbag-status change control means 5.

The processing unit 8 is further arranged to compare the received and saved information with previously received and saved information, and to control the vehicle-airbag-status display means 6 based on the comparison. The vehicle-airbag-status display means 6 are controlled such that at least one of the first and the second vehicle-airbag-statuses are displayed only if the airbag-status has been changed since the last occasion the same vehicle operator was identified by the vehicle operator identification means 4. According to some embodiments, the first vehicle-airbag-status is arranged to represent an inactive airbag **10** and the second vehicle-airbag-status is arranged to represent an active airbag 10. The airbag 10 may be controlled electrically and/or mechanically by the vehicle-airbag-status change control means 5. Hereby a vehicle operator is only required to see a particular vehicle-airbag-status once, independently of which vehicle-airbag-status that is selected.

The arrangement according to the embodiment illustrated in Fig. 1 may further comprise second vehicle-airbag-status display means **11.** The second vehicle-airbag-status display means 11 may be arranged to selectively display one of the first and the second vehicle-airbag-statuses only when a passenger airbag is activated. Alternatively the second vehicle-airbag-status display means 11 may be arranged to selectively display one of the first and the second vehicle-airbag-statuses only when a passenger airbag is inactivated. The second vehicle-airbag-status display means 11 may be a light, LED or display symbol of any kind. The second vehicle-airbag-status display means 11 may be arranged e.g. on the dashboard, centerstack or in the vicinity of the inner rear-view mirror in an upper part of a windshield.

The arrangement 1 may further comprise means **12** for providing an audible alert, arranged to provide the audible alert to the vehicle operator when at least one of the first and the second vehicle-airbag-statuses are displayed. The means 12 may be e.g. a vehicle audio system or a loudspeaker.

According to some embodiments, the arrangement 1 comprises means **13** for providing a haptic alert, arranged to provide the haptic alert to the vehicle operator when at least one of the first and the second vehicle-airbag-statuses are displayed. The means 13 may include an actuator, a piezoelectric motor or similar, arranged to vibrate e.g. a vehicle seat or a steering wheel.

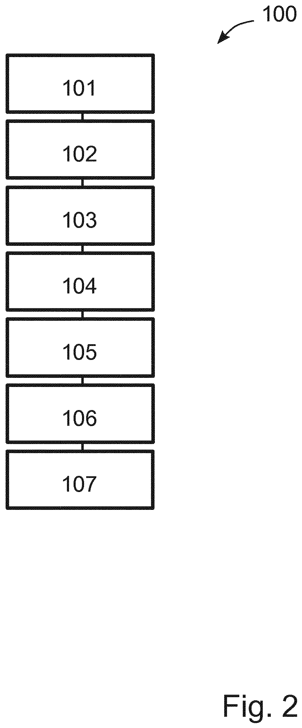

Fig. 2 illustrates a method **100** for controlling a vehicle-airbag-status display in a vehicle. The method comprises; Detecting **101,** by vehicle operator detection means, a vehicle operator. Identifying **102,** by vehicle operator identification means, the vehicle operator. Sending **103** information indicative of the vehicle operator identity to a processing unit. Sending **104** information indicative of an airbag-status change to the processing unit. Receiving and saving **105,** by the processing unit, the information indicative of the vehicle operator identity and the information indicative of the airbag-status change. Comparing **106,** by the processing unit, the received and saved information indicative of the vehicle operator identity and the received and saved information indicative of the airbag-status change with previously received and saved information. Controlling **107** vehicle-airbag-status display means based on the comparison by displaying at least one of the first and the second vehicle-airbag-statuses only if the airbag-status has been changed since the previous occasion the same vehicle operator was identified by the vehicle operator identification means.

## Claims

1. An arrangement (1) for control of a vehicle-airbag-status display in a vehicle (2) hosting the arrangement (1), the arrangement (1) comprising;
- vehicle-airbag-status display means (6), arranged to display, in a vehicle interior, at least one of a first and a second vehicle-airbag-statuses, wherein the first vehicle-airbag-status is arranged to represent an inactive airbag (10) and the second vehicle-airbag-status is arranged to represent an active airbag (10), wherein the arrangement (2) further comprises;
- vehicle operator detection means (3), arranged to detect a seated vehicle operator,
- vehicle operator identification means (4), arranged to identify a seated vehicle operator, detected by the vehicle operator detection means (3), and to send information indicative of the vehicle operator identity to a processing unit (8),
- vehicle-airbag-status change control means (5), arranged to control change of airbag-status and to send information indicative of airbag-status change to the processing unit (8),
- a processing unit (8) comprising memory means (9), the processing unit (8) being arranged to receive and save to the memory means (9) information from the vehicle operator identification means (4) and the vehicle-airbag-status change control means (5), to compare the received and saved information with previously received and saved information, and to control the vehicle-airbag-status display means (6) based on the comparison, such that at least one of the first and the second vehicle-airbag-statuses are displayed only if the airbag-status has been changed since the previous occasion the same vehicle operator was identified by the vehicle operator identification means (4) and such that neither one of the first and the second vehicle-airbag-statuses is displayed if the airbag-status has not been changed since the previous occasion the same vehicle operator was identified by the vehicle operator identification means (4).

2. An arrangement (1) according to claim 1, **characterized in that** the vehicle operator identification means (4) comprise image capturing means arranged to monitor the vehicle interior, and that at least one of the vehicle operator identification means (4) and the processing unit (8) comprises logic for the identification of the vehicle operator identity.

3. An arrangement (1) according to claim 1, **characterized in that** the vehicle operator identification means (4) are arranged to identify a seated vehicle operator through an identification device carried by the vehicle operator, the identification device being selectively one of;
- an electronic key,
- an RFID-tag and
- a mobile communication device.

4. An arrangement (1) according to any one of the preceding claims, **characterized in that** the vehicle-airbag-status display means (6) are arranged to display at least one of an icon, a symbol, a text message and a confirmation dialogue on a vehicle display (7) facing the vehicle interior.

5. An arrangement (1) according to any one of the preceding claims, **characterized in that** the arrangement (1) further comprise means (12) for providing an audible alert, arranged to provide the audible alert when at least one of the first and the second vehicle-airbag-statuses are displayed.

6. An arrangement (1) according to any one of the preceding claims, **characterized in that** the arrangement (1) further comprise means (13) for providing a haptic alert, arranged to provide the haptic alert when at least one of the first and the second vehicle-airbag-statuses are displayed.

7. An arrangement (1) according to any one of the preceding claims, **characterized in that** the arrangement (1) further comprise second vehicle-airbag-status display means (11), arranged to display the first vehicle-airbag-status only when a passenger airbag (10) is inactivated.

8. A vehicle (2), **characterized in that** the vehicle (2) comprises an arrangement (1) for control of vehicle-airbag-status display according to any one of the preceding claims.

9. A method (100) for controlling a vehicle-airbag-status display in a vehicle, wherein the method (100) comprises;
- detecting (101), by vehicle operator detection means, a seated vehicle operator;
- identifying (102), by vehicle operator identification means, the seated vehicle operator;
- sending (103) information indicative of the vehicle operator identity to a processing unit,
- sending (104) information indicative of an airbag-status change to the processing unit;
- receiving and saving (105), by the processing unit, the information indicative of the vehicle operator identity and the information indicative of the airbag-status change;
- comparing (106), by the processing unit, the received information indicative of the vehicle operator identity and the received information indicative of the airbag-status change with previously received and saved information;
- controlling (107) vehicle-airbag-status display means based on the comparison by displaying at least one of the first and the second vehicle-airbag-statuses only if the airbag-status has been changed since the previous occasion the same vehicle operator was identified by the vehicle operator identification means, wherein the first vehicle-airbag-status is arranged to represent an inactive airbag (10) and the second vehicle-airbag-status is arranged to represent an active airbag (10) and wherein neither one of the first and the second vehicle-airbag-statuses is displayed if the airbag-status has not been changed since the previous occasion the same vehicle operator was identified by the vehicle operator identification means (4).

## Patentansprüche

1. Anordnung (1) zum Steuern einer Fahrzeug-Airbag-Statusanzeige in einem Fahrzeug (2), das die Anordnung (1) beherbergt, wobei die Anordnung (1) Folgendes umfasst:
- ein Fahrzeug-Airbag-Statusanzeigemittel (6), das angeordnet ist, um in einem Fahrzeuginneren einen ersten und/oder einen zweiten Fahrzeug-Airbag-Status anzuzeigen, wobei der erste Fahrzeug-Airbag-Status angeordnet ist, um einen inaktiven Airbag (10) zu repräsentieren, und der zweite Fahrzeug-Airbag-Status angeordnet ist, um einen aktiven Airbag (10) zu repräsentieren, wobei die Anordnung (2) ferner Folgendes umfasst:
- ein Fahrzeugbetreiber-Erkennungsmittel (3), das angeordnet ist, um einen sitzenden Fahrzeugbetreiber zu erkennen,
- ein Fahrzeugbetreiber-Identifizierungsmittel (4), das angeordnet ist, um einen sitzenden Fahrzeugbetreiber zu identifizieren, der von dem Fahrzeugbetreiber-Erkennungsmittel (3) erkannt wurde, und um Informationen, die für die Identität des Fahrzeugbetreibers bezeichnend sind, an eine Verarbeitungseinheit (8) zu senden,
- ein Fahrzeug-Airbag-Statusänderungs-Steuerungsmittel (5), das angeordnet ist, um eine Veränderung des Airbag-Status zu steuern und Informationen, die für eine Änderung des Airbag-Status bezeichnend sind, an die Verarbeitungseinheit (8) zu senden,
- eine Verarbeitungseinheit (8), die ein Speichermittel (9) umfasst, wobei die Verarbeitungseinheit (8) angeordnet ist, um die Informationen des Speichermittels (9) von dem Fahrzeugbetreiber-Identifizierungsmittel (4) und dem Fahrzeug-Airbag-Statusänderungs-Steuerungsmittel (5) zu speichern, um die empfangenen und gespeicherten Informationen mit vorher empfangenen und gespeicherten Informationen zu vergleichen und basierend auf dem Vergleich das Fahrzeug-Airbag-Statusanzeigemittel (6) zu steuern, sodass der erste und/oder der zweite Fahrzeug-Airbag-Status nur angezeigt wird, wenn sich der Airbag-Status seit dem letzten Ereignis, bei dem derselbe Fahrzeugbetreiber von dem Fahrzeugbetreiber-Identifizierungsmittel (4) identifiziert wurde, verändert hat, und so, dass weder der erste noch der zweite Fahrzeug-Airbag-Status angezeigt wird, wenn sich der Airbag-Status seit dem letzten Ereignis, bei dem derselbe Fahrzeugbetreiber von dem Fahrzeugbetreiber-Identifizierungsmittel (4) identifiziert wurde, nicht verändert hat.

2. Anordnung (1) nach Anspruch 1, **dadurch gekennzeichnet, dass** das Fahrzeugbetreiber-Identifizierungsmittel (4) ein Bilderfassungsmittel zum Überwachen des Fahrzeuginnenraums umfasst, und dass das Fahrzeugbetreiber-Identifizierungsmittel (4) und/oder die Verarbeitungseinheit (8) eine Logik zum Identifizieren der Identität des Fahrzeugbetreibers umfasst.

3. Anordnung (1) nach Anspruch 1, **dadurch gekennzeichnet, dass** das Fahrzeugbetreiber-Identifizierungsmittel (4) angeordnet ist, um einen sitzenden Fahrzeugbetreiber durch eine von dem Fahrzeugbetreiber getragene Identifizierungsvorrichtung zu identifizieren, wobei die Identifizierungsvorrichtung wahlweise eines der Folgenden ist:
- ein elektronischer Schlüssel,
- ein RFID-Etikett, oder
- eine mobile Kommunikationsvorrichtung.

4. Anordnung (1) nach einem der vorangehenden Ansprüche, **dadurch gekennzeichnet, dass** das Fahrzeug-Airbag-Statusanzeigemittel (6) angeordnet ist, um ein Bildzeichen, ein Symbol, eine Textmeldung und/oder ein Bestätigungsdialogfeld auf einer Fahrzeuganzeige (7) anzuzeigen, die dem Inneren des Fahrzeugs zugewandt ist.

5. Anordnung (1) nach einem der vorangehenden Ansprüche, **dadurch gekennzeichnet, dass** die Anordnung (1) ferner ein Mittel (12) zum Bereitstellen einer hörbaren Warnung umfasst, das angeordnet ist, um die hörbare Warnung bereitzustellen, wenn der erste und/oder der zweite Fahrzeug-Airbag-Status angezeigt wird.

6. Anordnung (1) nach einem der vorangehenden Ansprüche, **dadurch gekennzeichnet, dass** die Anordnung (1) ferner ein Mittel (13) zum Bereitstellen einer haptischen Warnung umfasst, das angeordnet ist, um die haptische Warnung bereitzustellen, wenn der erste und/oder der zweite Fahrzeug-Airbag-Status angezeigt wird.

7. Anordnung (1) nach einem der vorangehenden Ansprüche, **dadurch gekennzeichnet, dass** die Anordnung (1) ferner ein zweites Fahrzeug-Airbag-Statusanzeigemittel (11) umfasst, das angeordnet ist, um den ersten Fahrzeug-Airbag-Status nur dann anzuzeigen, wenn ein Beifahrerairbag (10) deaktiviert ist.

8. Fahrzeug (2), **dadurch gekennzeichnet, dass** das Fahrzeug (2) eine Anordnung (1) zum Steuern der Fahrzeug-Airbag-Statusanzeige nach einem der vorangehenden Ansprüche umfasst.

9. Verfahren (100) zum Steuern einer Fahrzeug-Airbag-Statusanzeige in einem Fahrzeug, wobei das Verfahren (100) Folgendes umfasst:
- durch ein Fahrzeugbetreiber-Erkennungsmittel Erkennen (101) eines sitzenden Fahrzeugbetreibers;
- durch ein Fahrzeugbetreiber-Identifizierungsmittel Identifizieren (102) des sitzenden Fahrzeugbetreibers;
- Senden (103) von Informationen, die für die Identität des Fahrzeugbetreibers bezeichnend sind, an eine Verarbeitungseinheit,
- Senden (104) von Informationen, die für eine Airbag-Statusänderung bezeichnend sind, an die Verarbeitungseinheit;
- Empfangen und Speichern (105) der für die Identität des Fahrzeugbetreibers bezeichnenden Informationen und der für die Airbag-Statusänderung bezeichnenden Informationen durch die Verarbeitungseinheit;
- Vergleichen (106) der empfangenen, für die Identität des Fahrzeugbetreibers bezeichnenden Informationen und der empfangenen, für die Airbag-Statusänderung bezeichnenden Informationen mit vorher empfangenen und gespeicherten Informationen;
- Steuern (107) des Fahrzeug-Airbag-Statusanzeigemittels basierend auf dem Vergleich durch Anzeigen des ersten und/oder des zweiten Fahrzeug-Airbag-Status nur dann, wenn sich der Airbag-Status seit dem letzten Ereignis des Identifizierens desselben Fahrzeugbetreibers durch das Fahrzeugbetreiber-Identifizierungsmittel geändert hat, wobei der erste Fahrzeug-Airbag-Status angeordnet ist, um einen inaktiven Airbag (10) zu repräsentieren, und der zweite Fahrzeug-Airbag-Status angeordnet ist, um einen aktiven Airbag (10) zu repräsentieren, und wobei weder der erste noch der zweite Fahrzeug-Airbag-Status angezeigt wird, wenn sich der Airbag-Status seit dem letzten Ereignis des Identifizierens desselben Fahrzeugbetreibers durch das Fahrzeugbetreiber-Identifizierungsmittel (4) nicht geändert hat.

## Revendications

1. Agencement (1) pour la commande d'un affichage d'état d'un airbag de véhicule dans un véhicule (2) accueillant l'agencement (1), l'agencement (1) comprenant ;
- des moyens d'affichage d'état d'airbag de véhicule (6), agencés pour afficher, dans l'intérieur d'un véhicule, au moins l'un parmi un premier et un second état d'airbag de véhicule, le premier état d'airbag de véhicule étant agencé pour représenter un airbag inactif (10) et le second état d'airbag de véhicule étant agencé pour représenter un airbag actif (10), l'agencement (2) comprenant en outre :
- des moyens de détection de conducteur de véhicule (3), agencés pour détecter un conducteur de véhicule assis,
- des moyens d'identification de conducteur de véhicule (4), agencés pour identifier un conducteur de véhicule assis, détecté par les moyens de détection de conducteur de véhicule (3), et pour envoyer des informations indiquant l'identité du conducteur de véhicule à une unité de traitement (8),
- des moyens de commande de changement d'état d'un airbag de véhicule (5), agencés pour commander le changement d'état d'un airbag et pour envoyer à l'unité de traitement (8) des informations indiquant un changement d'état d'un airbag,
- une unité de traitement (8) comprenant des moyens de mémoire (9), l'unité de traitement (8) étant agencée pour recevoir et sauvegarder dans les moyens de mémoire (9) des informations provenant des moyens d'identification de conducteur de véhicule (4) et des moyens de commande de changement d'état d'airbag de véhicule (5), pour comparer les informations reçues et enregistrées avec les informations précédemment reçues et enregistrées, et pour commander les moyens d'affichage d'état d'airbag (6) du véhicule, en fonction de la comparaison, de telle sorte qu'au moins l'un des premier et second états de l'airbag d'un véhicule n'est affiché que si l'état de l'airbag a été modifié depuis la dernière fois que le même conducteur a été identifié par les moyens d'identification de conducteur du véhicule (4) et qu'aucun des premier et second états de l'airbag du véhicule n'est affiché si l'état de l'airbag n'a pas été modifié depuis la dernière fois où le même conducteur du véhicule a été identifié par les moyens d'identification de conducteur (4).

2. Agencement (1) selon la revendication 1, **caractérisé en ce que** les moyens d'identification de conducteur de véhicule (4) comprennent des moyens de capture d'image agencés pour surveiller l'intérieur du véhicule, et **en ce qu'**au moins un des moyens d'identification de conducteur de véhicule (4) et de l'unité de traitement (8) comprend une logique pour l'identification de l'identité de conducteur du véhicule.

3. Agencement (1) selon la revendication 1, **caractérisé en ce que** les moyens d'identification de conducteur de véhicule (4) sont agencés pour identifier un conducteur de véhicule assis au moyen d'un dispositif d'identification porté par le conducteur de véhicule, le dispositif d'identification étant de manière sélective l'un parmi :
- une clé électronique,
- une étiquette RFID et
- un appareil de communication mobile.

4. Agencement (1) selon l'une quelconque des revendications précédentes, **caractérisé en ce que** les moyens d'affichage (6) de l'état de l'airbag du véhicule sont agencés pour afficher au moins une icône, un symbole, un message texte et un dialogue de confirmation sur un affichage (7) du véhicule faisant face à l'intérieur du véhicule.

5. Agencement (1) selon l'une quelconque des revendications précédentes, **caractérisé en ce que** l'agencement (1) comprend en outre des moyens (12) pour fournir une alerte sonore, agencés pour fournir l'alerte sonore lorsqu'au moins un des premier et second états de l'airbag de véhicule est affiché.

6. Agencement (1) selon l'une quelconque des revendications précédentes, **caractérisé en ce que** l'agencement (1) comprend en outre des moyens (13) pour fournir une alerte haptique, agencés pour fournir l'alerte haptique lorsqu'au moins un des premier et second états de l'airbag de véhicule sont affichés.

7. Agencement (1) selon l'une quelconque des revendications précédentes, **caractérisé en ce que** l'agencement (1) comprend en outre des seconds moyens d'affichage d'état d'airbag de véhicule (11), agencés pour afficher le premier état d'airbag de véhicule seulement quand un airbag passager (10) est désactivé.

8. Véhicule (2), **caractérisé en ce que** le véhicule (2) comprend un agencement (1) pour commander l'affichage de l'état de l'airbag du véhicule selon l'une quelconque des revendications précédentes.

9. Procédé (100) de commande d'un affichage d'état d'un airbag de véhicule dans un véhicule, le procédé (100) comprenant :
- la détection (101), par des moyens de détection d'un conducteur de véhicule, d'un conducteur de véhicule assis ;
- l'identification (102), par des moyens d'identification de conducteur du véhicule, du conducteur du véhicule assis ;
- l'envoi (103) d'informations indicatives de l'identité du conducteur du véhicule à une unité de traitement,
- l'envoi (104) d'informations indiquant un changement d'état de l'airbag à l'unité de traitement ;
- la réception et la sauvegarde (105), par l'unité de traitement, des informations indicatives de l'identité du conducteur du véhicule et des informations indicatives du changement d'état de l'airbag ;
- la comparaison (106), par l'unité de traitement, des informations reçues indiquant l'identité du conducteur du véhicule et des informations reçues indiquant le changement d'état de l'airbag avec les informations précédemment reçues et enregistrées ;
- la commande (107) de moyens d'affichage de l'état d'un airbag d'un véhicule sur la base de la comparaison en affichant au moins l'un des premier et second états de l'airbag du véhicule uniquement si l'état de l'airbag a été modifié depuis la dernière fois que le même conducteur du véhicule a été identifié par les moyens d'identification de conducteur du véhicule, le premier état d'airbag de véhicule étant agencé pour représenter un airbag inactif (10) et le second état d'airbag de véhicule étant agencé pour représenter un airbag actif (10), et aucun des premier et second états d'airbag de véhicule n'étant affiché si l'état d'airbag n'a pas été modifié depuis la dernière fois que le même conducteur de véhicule a été identifié par les moyens d'identification de conducteur de véhicule (4).
